Europäisches Patentamt

European Patent Office

Office européen des brevets

(11) Veröffentlichungsnummer: **0 010 217**

**B1**

(12) **EUROPÄISCHE PATENTSCHRIFT**

(45) Veröffentlichungstag der Patentschrift: **15.12.82**

(21) Anmeldenummer: **79103742.7**

(22) Anmeldetag: **02.10.79**

(51) Int. Cl.³: **C 01 B 25/20, B 01 J 19/02**

(54) Vorrichtung zur Herstellung von Phosphorsäure.

(30) Priorität: **20.10.78 DE 2845642**

(43) Veröffentlichungstag der Anmeldung:
**30.04.80 Patentblatt 80/9**

(45) Bekanntmachung des Hinweises auf die Patenterteilung:
**15.12.82 Patentblatt 82/50**

(84) Benannte Vertragsstaaten:
**AT DE GB NL**

(56) Entgegenhaltungen:
**DE - A - 1 551 798**
**DE - B - 2 061 048**
**DE - C - 1 041 481**
**DE - C - 1 111 159**
**US - A - 3 254 846**

**K. WINNACKER et al. "Chemische Technologie"**
**3. Auflage, Band 1 1970,**
**CARL HANSER VERLAG, München, Seiten 393**
**bis 396**

**STAHLWERKE SÜDWESTFALEN, Nr. 50,**
**November 1960 "Rost- und säurebeständige**
**Stähle" Seiten 90, 91 und 96, 97**

(73) Patentinhaber: **HOECHST AKTIENGESELLSCHAFT**
**Postfach 80 03 20**
**D-6230 Frankfurt/Main 80 (DE)**

(72) Erfinder: **Thümmler, Ursus, Dr.**
**Am Kapellenbusch 27**
**D-5042 Erftstadt (DE)**
Erfinder: **Werner, Hugo**
**Brunhildstrasse 11**
**D-5030 Hürth (DE)**

Courier Press, Leamington Spa, England.

Vorrichtung zur Herstellung von Phosphorsäure

Die vorliegende Erfindung betrifft eine Vorrichtung zur Herstellung von Phosphorsäure durch Verbrennen von gelbem Phosphor in einem aus säurebeständigem Werkstoff gebauten Verbrennungsturm, wobei der Verbrennungsturm aus einem kegelförmigen Mantel und einem flachen Boden besteht, und wobei der Verbrennungsturm in seinem unteren Bereich ein stumpf an den Mantel angesetztes und schräg nach oben gerichtetes Abgasrohr aufweist, und wobei der Verbrennungsturm in seinem mittleren Bereich von mehreren abwärts gerichteten Einspritzdüsen durchdrungen ist, und wobei der Verbrennungsturm nahe seinem oberen Ende von einer konzentrisch angeordneten Säuretasse mit Überlaufwehr umgriffen ist, und wobei die Säuretasse einen konusförmigen Turmdeckel trägt und mit ihm dichtschließend verbunden ist, und wobei der Turmdeckel mittig von einem Halterohr mit einer Phosphorzerstäubungsdüse durchdrungen ist.

Es ist eine Vorrichtung zur Herstellung von Phosphorsäure durch Verbrennen von gelbem Phosphor bekannt, bei welcher ein aus einem kegelförmigen Mantel und einem flachen Boden bestehender gummierter Stahlturm verwendet wird, welcher innen mit einer säurefesten keramischen Auskleidung versehen ist. Der Turm weist in seinem unteren Bereich ein stumpf an den Mantel angesetztes und nach oben gerichtetes Abgasrohr auf. Während der Turm in seinem mittleren Bereich von mehreren abwärts gerichteten Einspritzdüsen durchdrungen ist, weist er nahe seinem oberen Ende eine Säuretasse mit Überlaufwehr auf. Den oberen Abschluß des Turmes bildet ein wassergekühlter Deckel, welcher von einer zentralen Verbrennungsdüse durchdrungen ist (vergl. WINNACKER-KÜCHLER: "Chemische Technologie", Band 1, Anorganische Technologie I, 1970, Seiten 393 und 396).

Nachteilig ist bei der bekannten Vorrichtung, daß die Beseitigung eines Lecks im gummierten und keramisch ausgekleideten Stahlturm, welches bei unzureichender Berieselung seiner Wände mit umlaufender Phosphorsäure leicht auftritt, wegen seines vielschichtigen Aufbaus einen großen Kosten- und Zeitaufwand erfordert. Weiterhin ist der Dekkel wegen seiner nicht kühlbaren Verrippungen infolge der Strahlungshitze der Phosphorflamme einem Verschleiß unterworfen, wobei der Verschleiß an den Bereichen des Deckels, an denen die Kühlung durch strömendes Wasser unzureichend ist, besonders stark ist.

Es ist daher Aufgabe der vorliegenden Erfindung, eine Vorrichtung zur Herstellung von Phosphorsäure durch Verbrennen von gelbem Phosphor mit Hilfe einer Zerstäubungsdüse in einem aus säurebeständigem Werkstoff gebauten Verbrennungsturm mit konusförmigem Deckel, Säuretasse und Ablaufrinne zu schaffen, bei welcher der Verschleiß am Verbrennungsturm und an seinem Deckel erheblich verringert wird. Das wird erfindungsgemäß dadurch erreicht, daß der Mantel des Verbrennungsturmes ein Kegelverhältnis von 1:10 bis 1:12 aufweist; daß als Überlaufwehr ein innerhalb der Säuretasse an der Oberkante des Mantels des Verbrennungsturmes vollständig waagerecht befestigter Rohrring dient; daß die Ablaufrinne mit mehreren Überlaufrohren versehen ist; daß der von dem konusförmigen Turmdeckel in Bezug auf die Horizontale gebildete Winkel $\alpha$ mindestens 19° beträgt; daß der Turmdeckel nahe seinem oberen Ende mit einem in Bezug auf die Horizontale senkrecht stehenden und konzentrisch zu seiner mittigen Öffnung angeordneten Stauring versehen ist; daß mit Abstand zum Stauring und konzentrisch dazu eine an einem horizontalen Tragring angehängte und auf dem Turmdeckel lose aufliegende flexible Gummilippe angeordnet ist; daß in die mittige Öffnung des Turmdeckels konzentrisch zum Halterohr ein wassergekühltes Luftführungsrohr eingehängt ist; und daß auf die mittige Öffnung des Turmdeckels ein mit ihr fluchtender Leitschaufelkranz aufgesetzt ist, dessen Leitschaufeln von außen verstellbar sind.

Die Vorrichtung gemäß der Erfindung kann weiterhin wahlweise noch dadurch ausgestaltet sein, daß

a) der Winkel $\alpha$ höchstens 25° beträgt,

b) das Luftführungsrohr ein aus mehreren Rohren gewickelten zylindrischer Körper ist.

Bei der erfindungsgemäßen Vorrichtung kann der Verbrennungsturm aus säurebeständigem Stahl der Werkstoff- Nummern 1.4571 oder 1.4505 nach DIN 17 440 gebaut sein.

Durch das Kegelverhältnis des Verbrennungsturmes bei der erfindungsgemäßen Vorrichtung wird sichergestellt, daß der an der Turminnenwand zu ihrer Kühlung ablaufende Phosphorsäurefilm sich nicht von der Wand ablöst und eine hinreichende Schichtdicke aufweist. Dadurch kann der aus säurebeständigem Stahl bestehende Verbrennungsturm ohne äußere Wasserkühlung betrieben werden.

Durch die Ausführung des Verbrennungsturmes bei der Vorrichtung gemäß der Erfindung als einfachen säurebeständigen Stahlmantel können eventuell daran auftretende Lecks in kurzen Stillstandszeiten geschlossen werden.

Bei der erfindungsgemäßen Vorrichtung ist der Turmdeckel so steil ausgeführt, daß er sich bei geringst möglicher Blechstärke selbst trägt und daher keine Versteifungsrippen erfordert. Deswegen kann der Turmdeckel durch das überströmende Wasser optimal gekühlt und seine Korrosion verhindert werden.

Durch die flexible Gummilippe, welche am Turmdeckel der Vorrichtung gemäß der Erfindung angeordnet ist, wird auch bei schwankenden Kühlwassermengen das Wasser stets zu einem gleichmäßigen Film auf der Oberfläche des Turmdeckels verteilt. Durch die Flexibilität der Lippe reinigt sich darüberhinaus der Spalt zwischen Lippe und Deckel selbsttätig.

Eine homogene Vermischung der durch den Luftansaugkrümmer angesaugten Luft mit dem Phosphor wird bei der erfindungsgemäßen Vorrichtung durch die Zusammenwirkung der Leitschaufeln mit verstellbarem Prallwinkel und dem Luftführungsrohr erreicht.

Die Standzeit des Luftführungsrohres, dessen Außenseite besonderer Korrosion unterworfen ist, wird bei der erfindungsgemäßen Vorrichtung durch seinen Aufbau aus mehreren, ineinander gewickelten Rohrschlangen, von denen jede einzelne zur Kühlung mit Wasser hoher Strömungsgeschwindigkeit getrennt durchströmt wird, erhöht.

In der beigefügten Zeichnung ist ein Ausführungsbeispiel des Gegenstandes der Erfindung schematisch und teilweise im Schnitt dargestellt. Dabei zeigen.

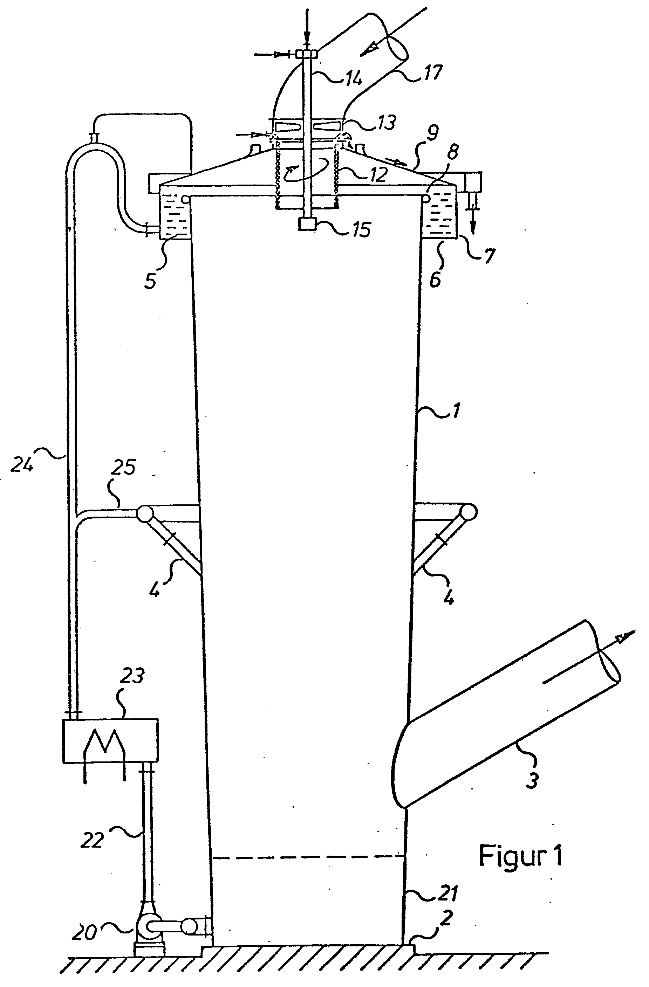

Figur 1 eine Seitenansicht auf die erfindungsgemäße Vorrichtung;

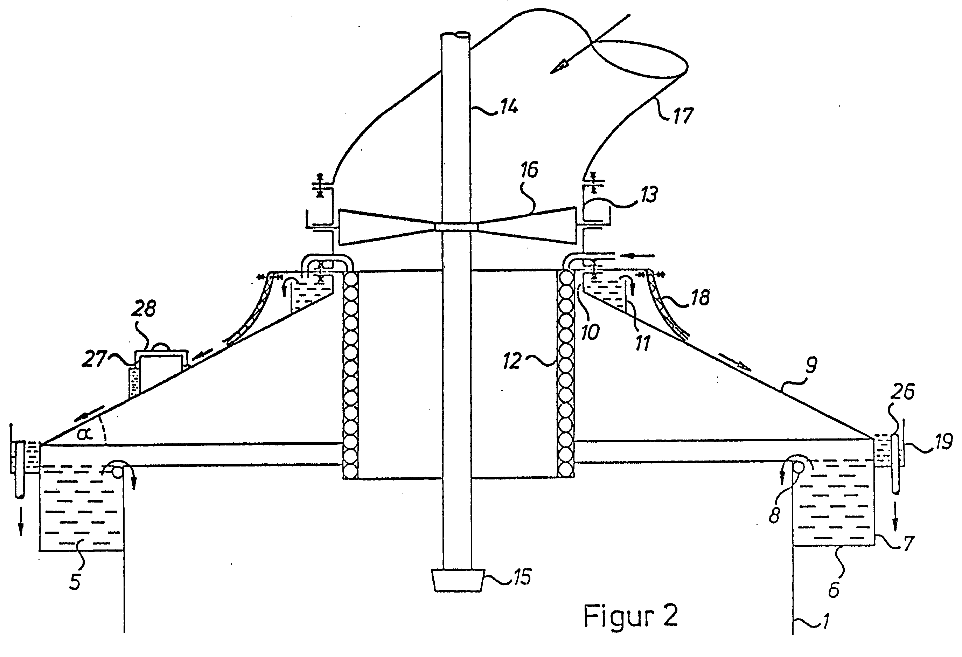

Figur 2 eine vergrößerte Darstellung des oberen Bereiches der Figur 1.

Ein auf einem Bodenfundament 2 freitragend aufgestellter Verbrennungsturm 1, welcher sich nach oben frei ausdehnen kann, besteht aus einem kegelförmigen Mantel und einem flachen Boden. Der Verbrennungsturm 1 weist in seinem unteren Bereich ein Abgasrohr 3 auf, welches stumpf an den Mantel angesetzt und schräg nach oben gerichtet ist. In seinem mittleren Bereich ist der Verbrennungsturm 1 von mehreren, abwärts gerichteten Einspritzdüsen 4 durchdrungen.

Der Verbrennungsturm 1 ist nahe seinem oberen Ende von einer konzentrisch angeordneten Säuretasse 5 umgriffen, welche aus einem Bodenringblech 6 und einem Zylindermantel 7 besteht. Ein am oberen Ende des Verbrennungsturmes 1 genau waagerecht befestigter Rohrring 8 bildet das Überlaufwehr der Säuretasse 5. Der Zylindermantel 7 trägt an seinem oberen Ende einem konusförmigen Turmdeckel 9, welcher mit ihm gasdicht verbunden ist. Die mittige Öffnung im Turmdeckel 9 wird durch einen einen oberen Flansch aufweisenden Stutzen 10 begrenzt, welcher von einem konzentrisch angeordneten Stauring 11 umgeben ist. In den Stutzen 10 ist ein wassergekühltes Luftführungsrohr 12 eingehängt, welches aus ineinander gewickelten Rohrschlangen besteht. Ein Leitschaufelkranz 13 ist mit dem Luftführungsrohr 12 und dem Stutzen 10 verschraubt. Der Leitschaufelkranz 13 weist mittig eine Öffnung auf, durch welche ein Halterohr 14 hindurchgeführt ist, das an seinem Ende innerhalb des Verbrennungsturmes 1 eine Phosphor-Zerstäubungsdüse 15 trägt. Weiterhin sind im Leitschaufelkranz 13 von außen verstellbare Leitschaufeln 16 angeordnet. Mit dem oberen Flansch des Leitschaufelkranzes 13 ist ein Luftansaugkrümmer 17 verschraubt.

Das aus dem Luftführungsrohr 12 auslaufende Kühlwasser läuft über den Stauring 11 auf den Turmdeckel 9, wobei der Stauring 11 das Wasser so hoch anstaut, daß der Stutzen 10 praktisch vollständig von Kühlwasser umspült wird. Konzentrisch zum Stauring 11 ist eine flexible Gummilippe 18 angeordnet, durch welche das den Stauring 11 überströmende Kühlwasser auf dem Turmdeckel 9 zu einem gleichmäßigen Wasserfilm verteilt wird. Am Zylindermantel 7 der Säuretasse 5 ist eine mit mehreren Überläufen 26 versehene Auffangrinne 19 derartig angeordnet, daß der Teil der Säuretasse 5, welcher nicht mit Säure gefüllt ist, von außen durch vom Turmdeckel 9 ablaufendes aufgestautes Wasser gekühlt wird.

Der Turmdeckel 9 weist zur Inspektion des Turminneren mehrere Öffnungen auf, an welchen teilweise von Wasser umspülte und mit Deckeln 28 verschließbare Schächte 27 angeordnet sind.

Die Beaufschlagung der Säuretasse 5 bzw. der Einspritzdüsen 4 mit umlaufender Phosphorsäure erfolgt mit Hilfe der Kreiselpumpe 20, deren Saugseite mit dem im unteren Bereich des Verbrennungsturmes 1 befindlichen Säurevorrat 21 in Verbindung steht, über die Rohrleitung 22, den Wärmetauscher 23 und die Rohrleitung 24 bzw. die Rohrleitung 25.

**Patentansprüche**

1. Vorrichtung zur Herstellung von Phosphorsäure durch Verbrennen von gelbem Phosphor mit Hilfe einer Zerstäubungsdüse (15) in einem aus säurebeständigem Werkstoff gebauten Verbrennungsturm (1), wobei der Verbrennungsturm (1) aus einem kegelförmigen Mantel und einem flachen Boden besteht, und wobei der Verbrennungsturm (1) in seinem unteren Bereich ein stumpf an den Mantel angesetztes und schräg nach oben gerichtetes Abgasrohr (3) aufweist, und wobei der Verbrennungsturm (1) in seinem mittleren Bereich von mehreren abwärts gerichteten Einspritzdüsen (4) durchdrungen ist, und wobei ein Rohrsystem (22, 24, 25) den unteren Teil des Verbrennungsturmes (1) über eine Pumpe (20) mit den Einspritzdüsen (4) und mit einer den oberen Bereich des Verbrennungsturmes (1) konzentrisch umgebenden Säuretasse (5) verbindet, und wobei eine Ablaufrinne (19) an der Außenseite der Säuretasse (5) nahe ihrem oberen Ende angeordnet ist, und wobei die Säuretasse (5) einen eine mittige Öffnung aufweisenden konusförmigen Turmdeckel (9) trägt und mit ihm dichtschließend verbunden ist, und wobei durch die mittige Öffnung des Turmdeckels (9) ein Halterohr (14) mit der Zerstäubungsdüse (15) an seinem Ende durchgeführt ist, dadurch gekennzeichnet, daß der Mantel des Verbrennungsturmes (1) ein Kegelverhältnis von 1:10 bis 1:12 aufweist; daß als Überlaufwehr ein innerhalb der Säuretasse (5) an der Oberkante des Mantels des Verbrennungsturmes (1) vollständig wa? _erecht befestigter Rohrring (8) dient; daß die ~blaufrinne (19) mit mehreren Überlaufrohren (26) versehen ist; daß der von dem konusförmigen Turmdeckel (9) in Bezug auf die Horizontale gebildete Winkel $\alpha$ mindestens 19° beträgt; daß der Turmdeckel (9) nahe seinem oberen Ende mit einem in Bezug auf die Horizontale senkrecht stehenden und konzentrisch zu seiner mittigen Öffnung angeordneten Stauring (11) versehen ist; daß mit Abstand zum Stauring (11) und konzentrisch dazu eine an einem horizontalen Tragring angehängte und auf dem Turmdeckel lose aufliegende flexible Gummilippe (18) angeordnet ist; daß in die mittige Öffnung des Turmdeckels (9) konzentrisch zum Halterohr (14) ein wassergekühltes Luftführungsrohr (12) eingehängt ist; und daß auf die mittige Öffnung des Turmdeckels (9) ein mit ihr fluchtender Leitschaufelkranz (13) aufgesetzt ist, dessen Leitschaufeln von außen verstellbar sind.

2. Vorrichtung nach Anspruch 1, dadurch gekennzeichnet, daß der Winkel $\alpha$ höchstens 25° beträgt.

3. Vorrichtung nach Anspruch 1 oder 2, dadurch gekennzeichnet, daß das Luftführungsrohr (12) ein aus mehreren Rohren gewichkelter zylindrischer Körper ist, wobei jedes einzelne Rohr zur Kühlung mit Wasser hoher strömungsgeschwindigkeit getrennt durch strömbar ist.

**Revendications**

1. Appareil destiné à la fabrication de l'acide phosphorique par combustion du phosphore blanc à l'aide d'une buse d'atomisation (15) à l'intérieur d'une tour de combustion (1) en matériau anti-acide, dans lequel la tour de combustion (1) comporte une enveloppe conique et un fond plat et, dans sa partie inférieure, un conduit (3) de gaz de sortie en position inclinée vers le haut et joint par rapprochement à l'enveloppe; dans lequel plusieurs buses d'injection (4) dirigées vers le bas sont disposées dans la partie centrale de la tour de combustion (1); dans lequel un système de conduits (22, 24, 25) relie la partie inférieure de la tour de combustion (1) par l'intermédiaire d'une pompe (20) aux buses d'injection (4) et à une tasse (5) recevant l'acide et entourant concentriquement la partie supérieure de la tour de combustion (1); dans lequel une goulotte d'écoulement (19) est disposée à l'extérieur de la tasse (5) recevant l'acide à proximité de son extrémité supérieure; dans lequel la tasse (5) recevant l'acide supporte un couvercle de tour (9) conique qui est muni d'une ouverture centrale et relié de façon étanche à celle-ci (5); et dans lequel un tube de serrage (14) se terminant dans une buse d'atomisation (15) traverse l'ouverture centrale du couvercle de tour (9), caractérisé en ce que l'enveloppe de la tour de combustion (1) présente un rapport conique de 1:10 jusqu .. :12; en ce qu'une baque en tubes (8) disposée à l'intérieur de la tasse (5) recevant l'acide et fixée complètement horizontalement au bord supérieur de l'enveloppe de la tour de combustion (1) sert de barrage de trop plein; en ce que la goulotte d'écoulement (19) est munie de plusieurs tuyaux de trop plein (26); en ce que l'angle $\alpha$ compris entre le couvercle de tour conique (9) et l'horizontal est égal à 19° au minimum; en ce que le couvercle de tour (9) est pourvu à proximité de son extrémité supérieure d'une baque de refoulement (11) montée perpendiculairement par rapport à l'horizontal et concentriquement par rapport à l'ouverture centrale du couvercle (9); en ce qu'un rebord élastique (18) en caoutchouc est disposé de manière à entourer concentriquement la baque de refoulement (11) et à en être espacé, le rebord (18) étant accroché à un anneau portant en position horizontale et reposant librement sur le couvercle de tour (9); en ce qu'un tube d'admission d'air (12) refroidi à l'eau est accroché dans l'ouverture centrale du couvercle de tour (9) concentriquement par rapport au tube de serrage (14); et en ce que plusieurs pales directrices (13) disposées en couronne sont montées sur l'ouverture centrale du couvercle de tour (9) en alignement avec celle-ci, les pales directrices individuelles étant réglables de l'extérieur.

2. Appareil selon la revendication 1, caractérisé en ce que l'angle $\alpha$ est égal à 25° au maximum.

3. Appareil selon la revendication 1 ou 2, caractérisé en ce que le tube d'admission d'air (12) est un élément cylindrique constitué par plusieurs conduits dont chacun peut être refroidi séparément à l'aide d'eau le parcourant à grande vitesse d'écoulement.

**Claims**

1. Apparatus for making phosphoric acid by burning yellow phosphorus with the aid of a spray nozzle (15) inside a combustion tower (1) of acidproof material, the combustion tower (1) being comprised of a cone-shaped shell and a flat bottom portion and having an inclined upwardly directed off-gas conduit (3) butt-secured to the lower portion of the shell; a plurality of downwardly directed injection nozzles (4) being disposed in the middle portion of the combustion tower (1); a conduit system (22, 24, 25) connecting the lower portion of the combustion tower (1) via a pump (20) to the injection nozzles (4) and to an acid-receiving cup (5) concentrically surrounding the upper portion of the combustion tower (1); a runoff gutter (19) being arranged outside the acid-receiving cup (5) near the upper end thereof; the acid-receiving cup (5) providing support for a cone-shaped tower cover (9) having a central opening and being tightly connected to the cup (5); a tubular holding means (14) terminating in a phosphorus spray nozzle (15) being passed through the central opening of the tower cover (9), characterized in that the shell of the combustion tower (1) presents a cone ratio of 1:10 up to 1:12; in that a tubular annular structure (8) disposed inside the acid-receiving cup (5) and being completely horizontally secured to the upper rim portion of the shell of the combustion tower (1) forms an overflow weir; in that the runoff gutter (19) is formed with a plurality of overflow pipes (26); in that the angle $\alpha$ formed by the cone-shaped tower cover (9) with respect to the horizontal is at least 19°; in that the tower cover (9) is provided, near its upper end, with a barrier ring (11) mounted perpendicularly with respect to the horizontal and concentrically with respect to the central opening therein; in that the barrier ring (11) is spaced apart from, and concentrically surrounded by, a flexible rubber lip (18) which is hooked on a horizontally arranged supporting ring and lies loosely on the tower cover (9); in that a water-cooled air inlet (12) is hooked in the central opening of the tower cover (9) concentrically with respect to the tubular holding means (14); and in that a plurality of guide plates (13) arranged as an annular set are mounted on the central opening of the tower cover (9) in alignment therewith, the individual guide plates being adjustable from the outside.

2. Apparatus as claimed in claim 1, wherein the angle $\alpha$ is equal to at most 25°.

3. Apparatus as claimed in claim 1 or 2, wherein the air inlet (12) is a cylindrical structure made up of a plurality of pipes, through each of which cooling water can be passed separately at high flow velocity.

Figur 1

Figur 2